# EUROPEAN PATENT APPLICATION

(11) **EP 4 333 100 A1**
(43) Date of publication of application: **06.03.2024**
(21) Application number: 22889449.9
(22) Date of filing: 04.11.2022
(51) Int. Cl.: H01M 4/13, H01M 4/04, H01M 4/64

(54) **POLE PIECE AND BATTERY**

(30) Priority: 04.11.2021 CN 202122693996 U
(71) Applicant: Zhuhai CosMX Battery Co., Ltd., Zhuhai, Guangdong 519180 (CN)
(72) Inventor: ZOU, Hu, Zhuhai, Guangdong 519180 (CN)
(74) Representative: Murgitroyd & Company
(86) International application number: PCT/CN2022/130055
(87) International publication number: WO 2023/078428

(57) **Abstract**

The present application provides an electrode plate and a battery, the electrode plate provided by the present application includes a current collector and an active material layer, the current collector includes a first segment, a first segment, and a first coating area, a second coating area and a slot area are distributed on at least one side of the first segment; the second coating area includes a transition area, and along a width direction of the current collector, the transition area is located between the slot area and an edge of the current collector; and the active material layer is attached to a surface of the current collector in the first coating area and the second coating area, and a thickness of the active material layer in the second coating area is less than a thickness of the active material layer in the first coating area. The present application is used for at least solving technical problems of easy breakage of an electrode plate.

## Description

### CROSS-REFERENCE TO RELATED APPLICATIONS

The present application claims priority to the Chinese Patent Application No. 202122693996.7, filed with the China National Intellectual Property Administration on November 4, 2021, and titled "ELECTRODE PLATE AND BATTERY", which is incorporated herein by reference in its entirety.

### TECHNICAL FIELD

The present application relates to the field of battery technologies, and in particular, to an electrode plate and a battery.

### BACKGROUND

As an environmentally green energy, lithium batteries have witnessed significant progress in recent years. There are increasing demands from consumers for the lithium batteries with relatively high performance. They not only require the lithium batteries with relatively high capacity, but also require the lithium batteries meet a charge-discharge rate.

In the lithium batteries, a tab is connected to a middle of an electrode plate, so that an internal resistance and a temperature rise of the lithium batteries may be reduced, thereby improving the charge-discharge rate. Considering an active material layer coated on a current collector in the middle of the electrode plate, in order to connect the tab, it is necessary to clean and remove the active material layer on the current collector. In the related technologies, the active material layer and the current collector at an edge of a slot for welding the tab are cut off together, and therefore, the slot with a gap is formed on the electrode plate. However, in the existing technologies, it is easy to cause breakage of an electrode plate in a slitting process, thereby affecting a quality of manufactured batteries.

Therefore, it is urgent to develop an electrode plate and a battery, to solve technical problems of easy breakage of an electrode plate.

### SUMMARY

The present application provides an electrode plate and a battery, so as to at least solve technical problems of easy breakage of an electrode plate.

In order to achieve the above-mentioned purposes, the present application provides an electrode plate, including a current collector and an active material layer, the current collector includes a first segment, and a first coating area, a second coating area and a slot area are distributed on at least one side of the first segment; the second coating area includes a transition area, and along a width direction of the current collector, the transition area is located between the slot area and an edge of the current collector; the active material layer is attached to a surface of the current collector in the first coating area and the second coating area; and a thickness of the active material layer in the second coating area is less than a thickness of the active material layer in the first coating area.

In the electrode plate provided by the present application, the first coating area the second coating area and the slot area are disposed, and the slot area is used for welding a tab. Since the second coating area includes the transition area, the transition area is located between the slot area and the edge of the current collector, and the thickness of the active material layer in the second coating area is less than the thickness of the active material layer in the first coating area, with this structure, there is no need to cut off an edge part of a slot area during slitting, as in the existing technologies, so that when the electrode plate is slit, a slitting position may be in a relatively wide transition area to avoid the slot area being slit and reduce slitting difficulty, thereby effectively solving problems of breakage of an electrode plate, and thus preventing the breakage of the electrode plate from affecting use security of a battery. Since a relatively small thickness of the second coating area is disposed, after the tab is welded, a phenomenon of uneven thickness caused by the tab being welded may effectively be solved, so that a thickness of a final jelly roll is uniform, thereby reducing a volume of a final battery after manufacturing, and thus improving energy density of a battery.

In a possible embodiment, the first coating area is disposed to extend to an edge of the first segment in a length direction of the first segment and a width direction of the first segment, and the slot area and the second coating area are both located in a middle of the first coating area along a length direction of the first coating area.

In a possible embodiment, along a length direction of the current collector, a ratio of a length of the slot area to a length of the transition area is S, where 5≥S≥1.

In a possible embodiment, along the width direction of the current collector, a width of the transition area ranges from 2 mm to 5 mm; and/or
along the width direction of the current collector, a width of the slot area ranges from 9 mm to 30 mm.

In a possible embodiment, the second coating area further includes a remaining area, along the width direction of the current collector, a position of the remaining area is opposite to a position of the transition area, and a width of the remaining area ranges from 0 mm to 5 mm.

In a possible embodiment, the first coating area, the second coating area and the slot area are distributed on both sides of the first segment, and distribution positions of the first coating area, the second coating area and the slot area on a side of the first segment respectively correspond to distribution positions of the first coating area, the second coating area and the slot area on another side of the first segment.

In a possible embodiment, surface shapes of the active material layer in the second coating area on both sides of the current collector are the same; or
surface shapes of the active material layer in the second coating area on both sides of the current collector are different.

In a possible embodiment, a surface shape of the active material layer in the second coating area is planar, wavy or inclined.

In a possible embodiment, the electrode plate further includes a tab, the tab includes a connecting segment and an extending segment which are connected to each other, the connecting segment is fixedly connected with one of slot areas on both sides of the current collector, and along the width of the current collector, the extending segment is disposed to extend to an outside of the first coating area.

In a possible embodiment, a thickness of the active material layer attached to the first coating area ranges from 20 µm to 200 µm; and/or
a thickness of the active material layer attached to the second coating area ranges from 0 µm to 200 µm; and/or
a thickness of the tab ranges from 100 µm to 500 µm.

The present application further provides a battery, including a housing and a battery cell accommodated in the housing. The battery cell includes a positive electrode plate, a negative electrode plate and a separator between the positive electrode plate and the negative electrode plate, the positive electrode plate, the negative electrode plate and the separator are wound together after being stacked, and at least one of the positive electrode plate and the negative electrode plate is the above-mentioned electrode plate.

In the electrode plate provided by the present application, since the second coating area is disposed, and the thickness of the active material layer in the second coating area is less than the thickness of the active material layer in the first coating area, after the tab is welded, problems of uneven thickness caused by the tab being welded may effectively be solved, thereby ultimately reducing a volume of a battery after manufacturing, and thus improving energy density of a battery.

In the electrode plate and the battery provided by the present application, since the slot area and the second coating area are both located in the middle of the first coating area along the length direction of the first coating area, after this structure of the electrode plate is manufactured into the battery, the slot area is used for welding the tab, so as to facilitate parallel connection of tabs, thereby reducing a current supplied by the battery and an internal resistance of the battery, and thus reducing release heat of the battery. Therefore, during fast charging or discharging, heat generation is reduced, which is beneficial for improving a charge-discharge rate of the battery.

In addition to the technical problems to be solved by the embodiments of the present application described above, technical features included in technical solutions and beneficial effects brought by the technical features of these technical solutions, other technical problems to be solved by the electrode plate and the battery that are provided in the embodiments of the present application, other technical features included in the technical solutions and beneficial effects brought by the other technical features of these technical solutions may be further described in detail in specific embodiments.

### BRIEF DESCRIPTION OF THE DRAWINGS

To describe technical solutions in embodiments of the present application or in the existing technologies more clearly, the following briefly describes the accompanying drawings required for describing the embodiments or the existing technologies. Apparently, the accompanying drawings in the following description show some embodiments of the present application, and a person of ordinary skill in the art may still derive other drawings from these accompanying drawings without creative efforts.
FIG. 1 is a schematic structural diagram of an electrode plate according to an embodiment of the present application;
FIG. 2 is a schematic structural diagram of a cross-section A-A of the electrode plate in FIG. 1 according to an embodiment of the present application;
FIG. 3 is another schematic structural diagram of an electrode plate according to an embodiment of the present application;
FIG. 4 is a schematic structural diagram of a cross-section B-B of the electrode plate in FIG. 3 according to an embodiment of the present application;
FIG. 5 is a schematic structural diagram of an electrode plate material strip according to an embodiment of the present application;
FIG. 6 is a schematic structural diagram of a cross-section C-C of the electrode plate material strip in FIG. 5 according to an embodiment of the present application;
FIG. 7 is another schematic structural diagram of a cross-section C-C of the electrode plate material strip in FIG. 5 according to an embodiment of the present application;
FIG. 8 is another schematic structural diagram of a cross-section C-C of the electrode plate material strip in FIG. 5 according to an embodiment of the present application;
FIG. 9 is another schematic structural diagram of a cross-section C-C of the electrode plate material strip in FIG. 5 according to an embodiment of the present application; and
FIG. 10 is another schematic structural diagram of a cross-section C-C of the electrode plate material strip in FIG. 5 according to an embodiment of the present application.

### Reference numerals:

10- current collector;
20- active material layer;
11- first segment;
12- second segment;
31- first coating area;
32- second coating area;
321- transition area;
322- remaining area;
33- slot area;
50- tab;
51- connecting section;
52- extending segment; and
60- slitting line.

### DETAILED DESCRIPTIONS OF THE EMBODIMENTS

To describe purposes, technical solutions and advantages of the present application more clearly, the following may provide a clear and complete description of the technical solutions of the present application in conjunction with the accompanying drawings. Apparently, the described embodiments are part of the embodiments of the present application, not all of them. Based on the embodiments of the present application, all other embodiments obtained by a person of ordinary skill in the art without creative efforts fall within the scope of protection of the present application.

In a structure of a battery, a tab is usually welded to a position close to an end of an electrode plate, and after the electrode plate is manufactured into the battery, a plurality of tabs are connected in series, so that an internal resistance of the battery is increased, resulting in high heat generation, and thus affecting its application in the fields of fast charging. In order to reduce the internal resistance and a temperature rise of the battery, the tab may be welded to a position close to a middle of the electrode plate, and the tabs are connected in parallel, thereby reducing the internal resistance of the battery, and thus reducing the heat generation of the battery, which is beneficial for improving a charge-discharge rate of the battery.

However, welding a tab to a position close to a middle of an electrode plate may easily cause uneven thickness distribution of the electrode plate, thereby affecting flatness of a battery cell after the electrode plate is finally wound into the battery cell, and thus easily increasing a thickness of a battery. In order to improve thickness distribution of an electrode plate, a current collector and an active material on the current collector at a position used for welding a tab on the electrode plate are cut off together in the related technologies, so that a slot with a gap for welding the tab is manufactured. When the electrode plate with such a structure is slit, due to influence of a cutting error, an offset of a position of a slitting line may easily lead to problems of breakage of an electrode plate, thereby affecting use security of a battery.

In view of the above-mentioned background, the present application provides an electrode plate and a battery. A structure of the electrode plate is improved, where a first coating area, a second coating area and a slot area are disposed, and the slot area is used for welding a tab. Since a transition area in the second coating area is located between the slot area and an edge of the first coating area, and a thickness of an active material layer in the second coating area is less than a thickness of an active material layer in the first coating area, with this structure, there is no need to cut off an edge part of the slot area, so that problems of breakage of an electrode plate may effectively be solved when the electrode plate is slit, thereby preventing poor manufacturing of an electrode plate from affecting use security of a battery.

The following describes an electrode plate and a battery in the embodiments of the present application with reference to the accompanying drawings.

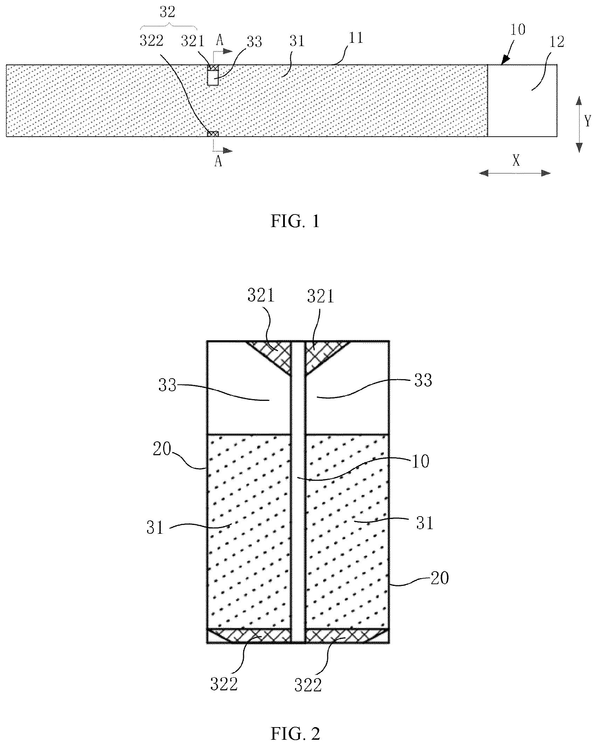

Referring to FIG. 1 and FIG. 2, the present application provides an electrode plate, including: a current collector 10 and an active material layer 20, the current collector 10 includes a first segment 11, and a first coating area 31, a second coating area 32 and a slot area 33 are distributed on at least one side of the first segment 11.

Referring to FIG. 1, the current collector 10 is lamellar, a direction represented by X is a length direction of the first coating area 31, i.e., a length direction of the current collector 10, and a direction represented by Y is a width direction of the first coating area 31, i.e., a width direction of the current collector 10. The first coating area 31 is disposed to extend to an edge of the first segment 11 in a length direction of the first segment 11 and a width direction of the first segment 11, i.e., a length of the first coating area 31 is equal to that of the first segment 11, and a width of the first coating area 31 is equal to that of the first segment 11. In a specific example, two ends of the slot area 33 and two ends of the second area 32 are spliced to the first coating area 31 respectively.

Referring to FIG. 1 and FIG. 2, the second coating area 32 includes a transition area 321, and along the width direction of the current collector 10, the transition area 321 is located between the slot area 33 and an edge of the current collector 10.

The active material layer 20 is not attached to a surface of the current collector 10 in the slot area 33, the active material layer 20 is attached to a surface of the current collector 10 in the first coating area 31 and the second coating area 32, and a thickness of the active material layer 20 in the second coating area 32 is less than a thickness of the active material layer 20 in the first coating area 31.

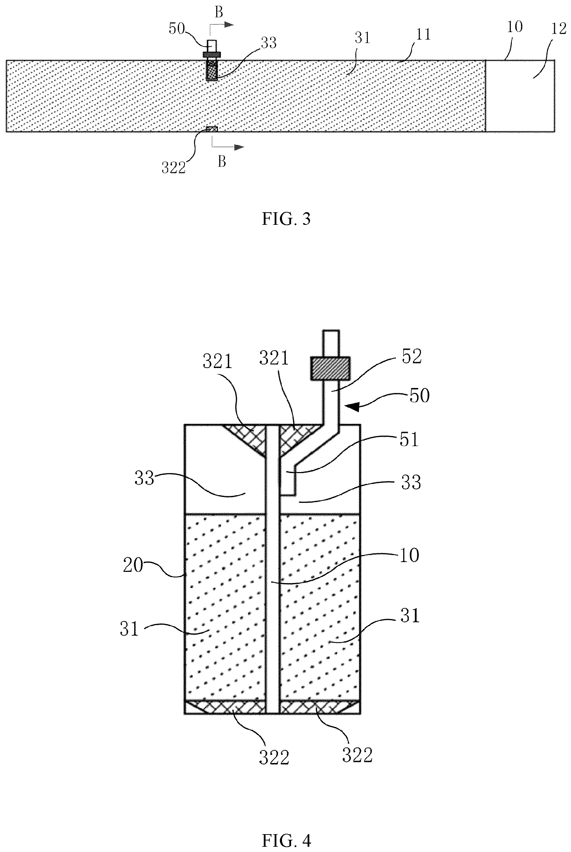

In the electrode plate provided by the present application, the first coating area 31, the second coating area 32 and the slot area 33 are disposed. Referring to FIG. 3 and FIG. 4, the slot area 33 is used for welding a tab 50. Since the second coating area 32 includes the transition area 321, and the transition area 321 is located between the slot area 33 and the edge of the current collector 10, with this structure, there is no need to cut off an edge part of the slot area 33, so that problems of breakage of an electrode plate may effectively be solved when the electrode plate is slit, thereby preventing poor manufacturing of an electrode plate from affecting use security of a battery.

In the electrode plate provided by the present application, the thickness of the active material layer 20 in the second coating area 32 is less than the thickness of the active material layer 20 in the first coating area 31. Since the second coating area 32 is disposed, after the tab is welded, a phenomenon of uneven thickness caused by the tab being welded may effectively be solved, so that flatness of a surface of a battery cell caused by a structure of an electrode plate is improved, thereby ultimately improving energy density of a battery.

In a possible embodiment, referring to FIG. 1 and FIG. 3, the slot area 33 and the second coating area 32 are both located in a middle of the first coating area 31 along a length direction of the first coating area 31, after this structure of the electrode plate is manufactured into a battery, the slot area 33 is used for welding the tab 50, so as to facilitate parallel connection of the tabs 50, thereby reducing a current supplied by the battery and an internal resistance of the battery, and thus reducing release heat of the battery. Therefore, during fast charging or discharging, heat generated is reduced, which is beneficial for improving a charge-discharge rate of a battery.

In a possible embodiment, along the length direction of the current collector 10, a ratio of a length of the slot area 33 to a length of the transition area 321 is S, where 5≥S≥1. The length of the slot area 33 may be longer than the length of the transition area 321, to ensure that there is sufficient space in the slot area 33 to weld the tab 50. The ratio S of the length of the slot area 33 to the length of the transition area 321 is controlled to be less than or equal to 5, so that energy density of a battery can be prevented from being affected by an excessive length of the slot area 33. A length direction of the slot area 33 and a length of the transition area 321 are consistent with the length of the current collector 10.

In a possible embodiment, along the length direction of the current collector 10, the ratio of the length of the slot area 33 to the length of the transition area 321 may be 1, 2, 3, 4 or 5.

In a possible embodiment, along the width direction of the current collector 10, a width of the transition area 321 ranges from 2 mm to 5 mm. A width direction of the transition area 321 and a width of the slot area 33 are consistent with the width direction of the current collector 10.

In a possible embodiment, along the width direction of the current collector 10, the width of the transition area 321 may be 2 mm, 3 mm, 4 mm or 5 mm.

In a possible embodiment, along the width direction of the current collector 10, a width of the slot area 33 ranges from 9 mm to 30 mm.

In a possible embodiment, along the width direction of the current collector 10, the width of the slot area 33 may be 9 mm, 10 mm, 15 mm, 20 mm, 25 mm or 30 mm.

It is easy to understand that in order to ensure a welding effect of the tab 50, the active material layer 20 is not attached to the surface of the current collector 10 in the slot area 33, and the length of the slot area 33 is greater than a width of the tab 50, so as to ensure that there is sufficient space in the slot area 33 to weld the tab 50. For example, the length of the slot area 33 may be 12 mm, the width of the tab 50 may be 4 mm, 5 mm or 6 mm, and the length of the transition area 321 may be equal to the width of the tab 50, i.e., 4 mm, 5 mm or 6 mm. When the tab 50 is welded on the slot area 33, there is sufficient safe distance to prevent the tab 50 from being welded to a position where the active material layer 20 is attached.

In a possible embodiment, referring to FIG. 1 and FIG. 3, the second coating area 32 further includes a remaining area 322, along the width direction of the current collector 10, a position of the remaining area 322 is opposite to a position of transition area 321, and a width of the remaining area 322 ranges from 0 mm to 5 mm. A width direction of the remaining area 322 is consistent with the width of the current collector 10.

In a possible embodiment, the electrode plate may include the remaining area 322, and the width of the remaining area 322 may be 1 mm, 2 mm, 3 mm, 4 mm or 5 mm. Of course, the remaining area 322 may also be excluded from the electrode plate, i.e., the width of the remaining area 322 is 0 mm. Whether the electrode plate includes the remaining area 322 depends on a slitting position of a slitting line 60.

A length of the remaining area 322 may be equal to that of the transition area 321. Before an electrode plate is slit, the remaining area 322 of the electrode plate and the transition area 321 of another electrode plate adjacent to the electrode plate are connected as a whole. After the electrode plate is slit, the remaining area 322 of the electrode plate is separated from the transition area 321 of another electrode plate adjacent to the electrode plate. Therefore, slitting and preparation efficiency of an electrode plate is further improved, while ensuring energy density of a battery loaded with the electrode plate.

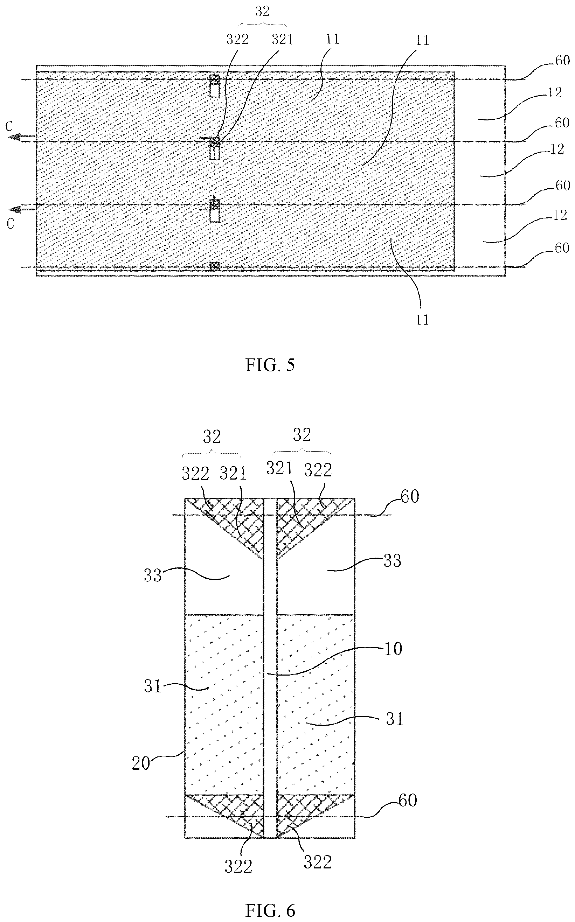

It is easy to understand that, referring to FIG. 1 and FIG. 6, the active material layer 20 is attached on a surface of the current collector 10 in the remaining area 322. Along the length direction of the first coating area 31, the remaining area 322 and the transition area 321 are both located in a middle of the first coating area 31, and positions of the remaining area 322 and the transition area 321 in the first coating area 31 are the same. Along the width direction of the first coating area 31, a position of the remaining area 322 is opposite to a position of the transition area 321, and the remaining area 322 and the transition area 321 may be at two ends of the first coating area 31, respectively.

In a possible embodiment, referring to FIG .3 and FIG. 4, the above-mentioned electrode plate further includes the tab 50. The tab 50 includes a connecting segment 51 and an extending segment 52 which are connected to each other, the connecting segment 51 is fixedly connected to the slot area 33, and along the width direction of the current collector 10, the extending segment 52 is disposed to extend to an outside of the first coating area 31 through the transition area 321.

In a possible embodiment, the connecting segment 51 and the slot area 33 are connected by welding. The connection between the tab 50 and the slot area 33 may be achieved in a laser welding mode.

The extending segment 52 is a part connected to the connecting segment 51, and the extending segment 52 is used to extend to a side edge of the electrode plate to connect to a positive electrode or a negative electrode of a battery. The extending segment 52 is disposed to extend to an outer side of the first coating area 31 through the transition area 321, and the extending section 52 may be attached to a surface of the transition area 321 to extend to the outer side of the first coating area 31.

In a possible embodiment, a thickness, formed after a thickness of the extending segment 52 is superimposed with a thickness of the active material layer 20 coated in the transition area 321, is less than or equal to a thickness of the active material layer 20 in the first coating area 31 to ensure that welding of the tab 50 does not cause local thickness thickening of the electrode plate, and thickness distribution of the electrode plate is uniform, so that after the electrode plate is wound into a battery cell, it is beneficial to improve flatness of a surface of the battery cell caused by a structure of an electrode plate, thereby avoiding impact on energy density of a battery due to an increase in volume of the battery cell.

In a possible embodiment, a thickness, formed after the thickness of the extending segment 52 is superimposed with the thickness of the active material layer 20 coated in the transition area 321, is greater than the thickness of the active material layer 20 in the first coating area 31. However, since the thickness of the active material layer 20 in the transition area 321 is less than the thickness of the active material layer 20 in the first coating area 31, compared to a structure of an electrode plate without the transition area 321, it is also beneficial for uniform distribution of a thickness after the tab 50 is welded, which not only avoids problems of breakage of an electrode plate, but also reduces a thickness of a battery cell manufactured by winding the electrode plate to a certain extent, thereby avoiding adverse effects on energy density of a battery.

In a possible embodiment, the first coating area 31, the second coating area 32 and the slot area 33 are distributed on a side of the first segment 11, and another side of the first segment 11 is all provided with the first coating area 31, which is not shown in figures.

In a possible embodiment, referring to FIG. 1 and FIG. 6, the first coating area 31, the second coating area 32 and the slot area 33 are distributed on both sides of the first segment 11, and distribution positions of the first coating area 31, the second coating area 32 and the slot area 33 on a side of the first segment 11 respectively correspond to distribution positions of the first coating area 31, the second coating area 32 and the slot area 33 on another side of the first segment 11. With this structure, a corresponding position of a back surface of the slot area 33 is also the slot area 33, so that when the tab 50 is welded, a stress of the electrode plate may be reduced.

In a possible embodiment, referring to FIG. 3 and FIG. 4, the tab 50 is connected to one of the slot areas 33 in both sides of the current collector 10. The connecting segment 51 of the tab 50 and the slot area 33 in a side of the current collector 10 may be welded and connected by a laser welding mode.

In a possible embodiment, referring to FIG. 2, along the width direction of the first coating area 31, the thickness of the active material layer 20 in the second coating area 32 is in gradient distribution that gradually increases and decreases.

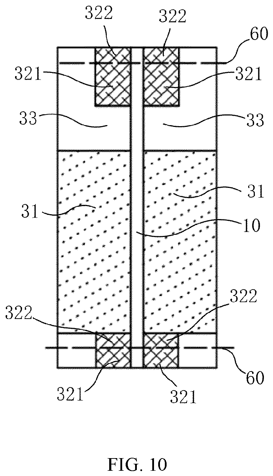

In a possible embodiment, referring to FIG. 10, the thickness of the active material layer 20 in the second coating area 32 is consistent.

In a possible embodiment, the active material layer 20 in the second coating area 32 may be first uniformly coated, and then the active material layer 20 is removed along a thickness direction of the second coating area 32 according to a gradient.

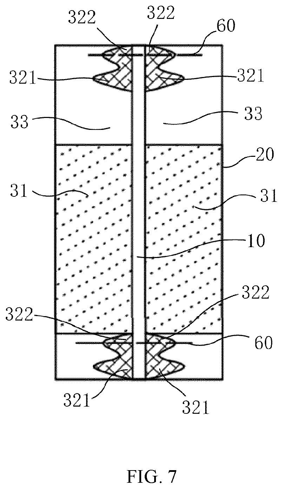

In a possible embodiment, referring to FIG. 7, a surface of the active material layer 20 in the second coating area 32 is wavy, i.e., the active material layer 20 in the second coating area 32 may be in a wavy block shape.

In a possible embodiment, referring to FIG. 6, a surface of the active material layer 20 in the second coating area 32 is inclined, i.e., the active material layer 20 in the second coating area 32 may be in a triangular block shape.

In a possible embodiment, referring to FIG. 10, a surface of the active material layer 20 in the second coating area 32 is planar, i.e., the active material layer 20 in the second coating area 32 may be in a rectangular block shape.

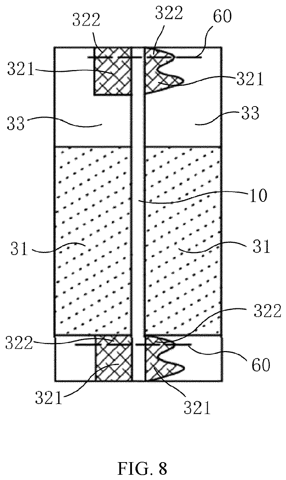

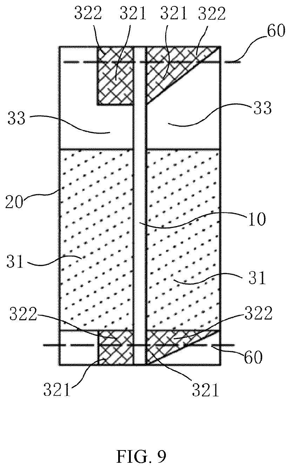

In a possible embodiment, surface shapes of the active material layer 20 in the second coating area 32 on both sides of the current collector 10 may be the same or different, i.e., shapes of the active material layer 20 in the second coating area 32 distributed on both sides of the first segment 11 may be the same or different. For example, referring to FIG. 5 and FIG. 7, the shapes of the active material layer 20 in the second coating area 32 distributed on both sides of the first segment 11 may both be in a rectangular block shape, or the active material layer 20 in the second coating area 32 distributed on both sides of the first segment 11 may both have a wavy surface or an inclined surface. Referring to FIG. 8 and FIG. 9, the shape of the active material layer 20 in the second coating area 32 distributed on a side of the first segment 11 may be in a rectangular block shape, and the active material layer 20 in the second coating area 32 distributed on another side of the first segment 11 may have a wavy surface or an inclined surface.

A size of the second coating area 32 of the electrode plate and a size of the slot area 33 of the electrode plate may be adjusted according to a size of a battery.

In this embodiment, it is not necessary to perform cutting treatment on a periphery of the slot area 33 used for welding the tab 50, so that damage to a welding position of the tab 50 on the electrode plate is avoided, thereby reducing and optimizing breakage of an electrode plate and failure of a tab in a slot position.

In a possible embodiment, the current collector 10 further includes a second segment 12 connected to at least one end of the first segment 11, and the active material layer 20 is not attached to a surface of the second segment 12.

In a possible embodiment, the above-mentioned electrode plate may be a positive electrode plate, or may be a negative electrode plate.

A material of the current collector 10 in the positive electrode plate and the negative electrode plate may be set according to actual requirements, which is not further limited. For example, the current collector 10 in the positive electrode plate may be aluminum foil, and the current collector 10 in the negative electrode plate may be copper foil.

A type and proportion of an active material in the active material layer 20 in the positive electrode plate and the negative electrode plate may be set according to actual requirements, which is not further limited. For example, the active material in the active material layer 20 in the negative electrode plate may include materials such as graphite, hard carbon, silicon, and silicon monoxide, and the active material in the active material layer 20 in the positive electrode plate may include materials such as lithium cobaltate, lithium iron phosphate, and lithium manganate.

Referring to FIG. 5, the present application further provides an electrode plate material strip, including the above-mentioned electrode plate. A plurality of electrode plates are connected sequentially along the width direction of the current collector 10, the first segment 11 of an electrode plate is connected to the first segment 11 of another electrode plate adjacent to the electrode plate, and the second segment 12 of the electrode plate is connected to the second segment 12 of another electrode plate adjacent to the electrode plate.

The electrode plate material strip is a material for manufacturing the electrode plate. In order to improve production efficiency, a surface of the electrode plate material strip is usually coated with the active material layer 20, and then electrode plate slitting is performed on the electrode plate material strip. In slitting steps of an electrode plate, the electrode plate material strip is slit along the slitting line 60, so as to slit the electrode plate material strip into a plurality of electrode plates. The slitting line 60 is a virtual line extending along a length direction of the electrode plate. After the electrode plate slitting is completed, the electrode plate material strip on both sides of the slitting line 60 becomes two separate electrode plates.

In a possible embodiment, the remaining area 322 of the second coating area 32 in an electrode plate is connected to the transition area 321 of the second coating area 32 in another electrode plate adjacent to the electrode plate. Referring to FIG. 5 and FIG. 7, due to disposal of such a structure, during slitting of the electrode plate, the second coating area 32 are divided into the remaining area 322 and the transition area 321 which are located on two different electrode plates respectively through the slitting line 60. Since surfaces of the current collector 10 in the remaining area 322 and the transition area 321 are coated with the active material layer 20, it is possible to avoid that other parts, except the slot area 33, of the first segment 11 in the electrode plate are exposed out of a surface of the current collector 10 due to a slitting error of the electrode plate, thereby preventing a quality of a battery and a safety performance of a battery from being affected.

In a possible embodiment, a thickness of the active material layer 20 attached to the first coating area 31 ranges from 20 µm to 200 µm; and/ or a thickness of the active material layer 20 attached to the second coating area 32 ranges from 0 µm to 200 µm.

For example, an average thickness of the active material layer 20 attached to the first coating area 31 may be 20 µm, and an average thickness of the active material layer 20 attached to the second coating area 32 may be 10 µm; or an average thickness of the active material layer 20 attached to the first coating area 31 may be 100 µm, and an average thickness of the active material layer 20 attached to the second coating area 32 may be 50 µm or 80 µm; or an average thickness of the active material layer 20 attached to the first coating area 31 may be 200 µm, and an average thickness of the active material layer 20 attached to the second coating area 32 may be 70 µm or 100 µm, as long as the thickness of the active material layer 20 in the second coating area 32 is less than the thickness of the active material layer 20 in the first coating area 31.

In a possible embodiment, a thickness of the tab 50 ranges from 100 µm to 500 µm. For example, an average thickness of the tab 50 may be 100 µm, 200 µm, 300 µm, 400 µm or 500 µm.

The present application provides the electrode plate material strip, referring to FIG. 5, since the surfaces of the current collector 10 in the transition area 321 and the remaining area 322 are coated with the active material layer 20, even if the slitting line 60 shifts upwards or downwards along the width direction of the current collector 10 due to influence of the slitting error, a final result is a change in an area size of the transition area 321 and the remaining area 322 connected to the transition area 321, which may not expose the current collector 10 in the remaining area 322 and may not cause a gap at a position of the remaining area 322, thereby avoiding problems of breakage of an electrode plate.

The slitting of the electrode plate material strip may be achieved by a forming machine or a forming and winding integrated machine, and the electrode plate in the embodiments may also be manufactured in a laser slitting mode.

The present application further provides a battery, the battery includes a housing and a battery cell accommodated in the housing. The battery cell includes a positive electrode plate, a negative electrode plate and a separator separated between the positive electrode plate and the negative electrode plate, the positive electrode plate, the negative electrode plate and the separator are wound together after being stacked, and at least one of the positive electrode plate and the negative electrode plate is the above-mentioned electrode plate.

It is easy to understand that in the battery provided by the present application, the positive electrode plate may be the above-mentioned electrode plate, and the negative electrode plate may be a conventional electrode plate; or the negative electrode plate may be the above-mentioned electrode plate, and the positive electrode plate may be a conventional electrode plate. Of course, both the positive electrode plate and the negative electrode plate may be the above-mentioned electrode plate.

In the battery provided by the present application, since the above-mentioned electrode plate is adopted, flatness of a surface of the battery cell is good, and stress uniformity of a surface of the electrode plate in a cycling process of charging and discharging is good, which prolongs life of the battery and is beneficial for improving a charge-discharge rate of the battery.

The separator is disposed to separate the positive electrode plate and the negative electrode plate, so as to prevent a short circuit caused by contact between the positive electrode plate and the negative electrode plate. In addition, the separator also has a function of enabling an electrolyte ion in an electrolyte to pass through.

The separator may include a base material and a coating layer, where the base material may be a polyethylene (PE) single-layer film, a polypropylene (PP) single-layer or a polypropylene-polyethylene-polypropylene three-layer composite film, and the coating layer may be at least one of porous silicon dioxide, aluminum oxide, titanium dioxide and zirconium dioxide.

The housing is further filled with an electrolyte, and the battery cell is immersed in the electrolyte.

In a possible embodiment, the above-mentioned battery cell may be a battery cell with a winding structure.

In a possible embodiment, the above-mentioned battery may be a pouch cell, an aluminum housing cell or a cylindrical cell.

In the description of the present application, it should be understood that orientation or position relationships indicated by the used terms, such as "center", "length", "width", "thickness", "top end", "bottom end", "up", "down", "left", "right", "front", "back", "vertical", "horizontal", "inner", "outer", "axial" and "circumferential", are orientation or position relationships based on the drawings, which is only for the convenience of describing the present application and simplifying the description, rather than indicating or implying that indicated positions or original components must have a specific orientation and must be constructed and operated in a specific manner. Therefore, it cannot be understood as a limitation on the present application.

In addition, the terms "first" and "second" are merely used to describe the purposes and cannot be understood as indicating or implying relative importance or implying the quantity of indicated technical features. Therefore, features limited to "first" and "second" may explicitly or implicitly include one or more of these features. In the description of the present application, "a plurality of" means at least two, such as two and three, unless otherwise specified..

In the present application, unless otherwise specified and limited, the terms "install", "connect", "attach", "fix", etc. should be understood broadly, for example, it may be fixed connection, detachable connection, or integrated; it may be mechanical connection, electrical connection, or communication with each other; or it may be directly connected or indirectly connected through an intermediate medium, which may create internal connectivity or interaction between two components. For a person of ordinary skill in the art, specific meanings of the above terms in the present application may be understood based on specific circumstances.

In the present application, unless otherwise explicitly specified and limited, disposal of a first feature above or below a second feature may include direct contact between the first feature and the second feature, or may include the first feature and the second feature that are not directly in contact but through other features between the first feature and the second feature. Moreover, disposal of the first feature above, on or over the second feature includes the first feature directly above and diagonally above the second feature, or simply indicates that the first feature is horizontally higher than the second feature. Disposal of the first feature below, under or underneath the second feature includes the first feature directly below and diagonally below the second feature, or simply indicates that a horizontal height of the first feature is less than that of the second feature.

Finally, it should be noted that the above embodiments are only used to illustrate the technical solutions of the present application and not to limit it. Although the present application has been described in detail with reference to the foregoing embodiments, a person skilled in the art should understand that: they may still modify the technical solutions recited in the forgoing embodiments, or equivalently replace some or all of the technical features thereof, and these modifications or replacements do not make the essence of the corresponding technical solutions deviate from the scope of the technical solutions of the embodiments of the present application.

## Claims

1. An electrode plate, **characterized by** comprising: a current collector (10) and an active material layer (20), wherein the current collector (10) comprises a first segment (11), and a first coating area (31), a second coating area (32) and a slot area (33) are distributed on at least one side of the first segment (11);
the second coating area (32) comprises a transition area (321), and along a width direction of the current collector (10), the transition area (321) is located between the slot area (33) and an edge of the current collector (10);
the active material layer (20) is attached to a surface of the current collector (10) in the first coating area (31) and the second coating area (32); and
a thickness of the active material layer (20) in the second coating area (32) is less than a thickness of the active material layer (20) in the first coating area (31).

2. The electrode plate according to claim 1, wherein the first coating area (31) is disposed to extend to an edge of the first segment (11) in a length direction of the first segment (11) and a width direction of the first segment (11), and the slot area (33) and the second coating area (32) are both located in a middle of the first coating area (31) along a length direction of the first coating area (31).

3. The electrode plate according to claim 1, wherein along a length direction of the current collector (10), a ratio of a length of the slot area (33) to a length of the transition area (321) is S, wherein 5≥S≥1.

4. The electrode plate according to claim 1, wherein along the width direction of the current collector (10), a width of the transition area (321) ranges from 2 mm to 5 mm; and/or
along the width direction of the current collector (10), a width of the slot area (33) ranges from 9 mm to 30 mm.

5. The electrode plate according to claim 1, wherein the second coating area (32) further comprises a remaining area (322), along the width direction of the current collector (10), a position of the remaining area (322) is opposite to a position of the transition area (321), and a width of the remaining area (322) ranges from 0 mm to 5 mm.

6. The electrode plate according to claim 1, wherein the first coating area (31), the second coating area (32) and the slot area (33) are distributed on both surfaces of the first segment (11), and distribution positions of the first coating area (31), the second coating area (32) and the slot area (33) on a side of the first segment (11) respectively correspond to distribution positions of the first coating area (31), the second coating area (32) and the slot area (33) on another side of the first segment (11).

7. The electrode plate according to claim 6, wherein surface shapes of the active material layer (20) in the second coating area (32) on both sides of the current collector (10) are the same; or
surface shapes of the active material layer (20) in the second coating area (32) on both sides of the current collector (10) are different.

8. The electrode plate according to claim 1, wherein a surface shape of the active material layer (20) in the second coating area (32) is planar, wavy or inclined.

9. The electrode plate according to any one of claims 1 to 8, further comprising a tab (50), wherein the tab (50) comprises a connecting segment (51) and an extending segment (52) which are connected to each other, the connecting segment (51) is fixedly connected to one of slot areas (33) on both sides of the current collector (10), and along the width direction of the current collector (10), the extending segment (52) is disposed to extend to an outside of the first coating area (31).

10. The electrode plate according to claim 9, wherein a thickness of the active material layer (20) attached to the first coating area (31) ranges from 20 µm to 200 µm; and/ or
a thickness of the active material layer (20) attached to the second coating area (32) ranges from 0 µm to 200 µm; and/ or
a thickness of the tab (50) ranges from 100 µm to 500 µm.

11. A battery, comprising a housing and an battery cell accommodated in the housing, and **characterized in that** the battery cell comprises a positive electrode plate, a negative electrode plate and a separator between the positive electrode plate and the negative electrode plate, the positive electrode plate, the negative electrode plate and the separator are wound together after being stacked, and at least one of the positive electrode plate and the negative electrode plate is the electrode plate of any one of claims 1 to 9.
